# EUROPEAN PATENT SPECIFICATION

(11) **EP 3 447 671 B1**
(45) Date of publication and mention of the grant of the patent: **20.09.2023**
(21) Application number: 17836457.6
(22) Date of filing: 31.07.2017
(51) Int. Cl.: G06F 21/62, H04L 67/50

(54) **SYSTEM AND METHOD FOR CONTROLLING PERSONAL DATA OF A USER OF TELECOMMUNICATIONS NETWORKS**
SYSTEM UND VERFAHREN ZUR STEUERUNG PERSÖNLICHER DATEN EINES NUTZERS VON TELEKOMMUNIKATIONSNETZWERKEN
SYSTÈME ET PROCÉDÉ DE CONTRÔLE DE DONNÉES PERSONNELLES D'UN UTILISATEUR DANS DES RÉSEAUX DE TÉLÉCOMMUNICATIONS

(30) Priority: 05.08.2016 WO PCT/ES2016/070591
(43) Date of publication of application: 27.02.2019
(73) Proprietor: Telefonica, S.A., 28013 Madrid (ES)
(72) Inventor: ÁLVAREZ-PALLETE LÓPEZ, José María, 28013 Madrid (ES); ALONSO CEBRIÁN, José María, 28013 Madrid (ES); GUZMÁN SACRISTÁN, Antonio, 28013 Madrid (ES)
(74) Representative: Carlos Hernando, Borja
(86) International application number: PCT/ES2017/070560
(87) International publication number: WO 2018/024933

(56) References cited:
- EP-A1- 2 352 323
- WO-A1-2016/063092
- US-A1- 2011 202 881
- US-A1- 2012 265 528
- US-A1- 2014 149 562
- US-A1- 2015 213 355

## Description

### Field of the invention

The present invention relates to the preservation of the privacy of data, the portability of the data in telecommunications networks and digital services as well as to the analysis and valuation of the data in a controlled manner by the user generating said data.

The invention proposes a system and a method that controls the collection of the vast data generated by each user during their interaction with the telecommunications networks and services, their availability to the user for their knowledge, the management of selective permissions to third parties to value said data, as well as acting via the network and services based on said data.

### Background of the invention

The users of telecommunications networks and systems as well as the services built on them generate a vast amount of data pertaining, amongst other things, to the manner in which the users interact consciously or unconsciously with the network, to the use that they make of the terminals and applications installed on them or to their consumption of digital services. These data comprise, but are not limited to, location data of the users, their activity in the navigating the network, the applications that they download and use, their voice and messaging communication activity, their preferences in audiovisual services, their television consumption, etc.

In terms of identifying the different areas of data generation, the way in which the telecommunication companies are structured can be modelled based on a model of a number of levels or platforms.

The first level corresponds to the physical assets of the operator, that is to say the fixed access networks, such as copper or fiber networks and mobile networks, backbone network, data centers, etc. This first level is the foundation on which telecommunications operators build their services offering to the users.

The second level is composed of the IT systems of the operator, such as for example the network systems allowing smart management of the networks of the first level; commercial systems allowing the management of the commercial offering and the subscription of the clients to different services; the pricing and billing systems, etc. In summary, this second level incorporates intelligence into the physical assets of the first level.

In a third level, we find the value-added products and services offered via the networks of the telecommunications operator, such as digital television over IP, security services, the Internet of things, financial services, etc. These services can be offered by the telecommunications operator itself and also by third parties, the latter are referred to as over-the-top (OTT) services since they are built on an external telecommunications network.

All the information generated at these levels can be temporarily or permanently stored on a number of servers and in a wide variety of formats such as for example network traces or call detail records (CDRs).

In addition, virtual assistants are starting to proliferate which automate the interaction with the users without the need for a human assistant to be available in real time. These services are not only offered by telecommunications operators, but by any service requiring assistance for the end user. There are even virtual assistants that are the service themselves and are offered to manage, for example, a domestic environment by means of a voice interface. Virtual assistants found in the prior art are already capable of solving, with a moderate to high degree of success, the requests made by the user, at least when they relate to basic interactions.

### Limitations to existing solutions:

Traditionally, only part of all this information is stored and what is stored is scattered throughout different systems. Of this subset, part is used by the telecommunications operator to correctly provide the services contracted by the client/user.

This information may possibly be aggregated and used by the telecommunications operator or by a third party, with prior consent therefor, for purposes other than providing services, such as for example to create a user profile by means of which advertising is offered in a more targeted manner. However, this occurs less frequently, in part due to the legal requirement, in certain legislations, to request express permission from the user which is a sensitive process and may raise suspicions in the end user.

In fact, the disclosure and subsequent use of these data is rarely controllable by the user, beyond the general acceptance clauses (opt-in) which give little information on the distribution and use that is going to be made of said data. This is particularly relevant to the case of services offered by third parties requiring significant disclosures of data from the users as irrevocable compensation for providing services that are often free. Examples of significant disclosures of private data carried out by many users without considering their relevance are access permission to contacts book or location data to free apps. In these cases, it may be said that the user is "paying" for the service with their data and often loses control over the use of the same.

With respect to virtual assistants in the prior art, it should be stated that there are limitations in terms of the utilization of context data. In fact, they can compile a user profile based on the context of past interactions which they use to infer the intentions of the user (user intent) when they interact with the virtual assistant. However, there are serious limitations in various aspects. Firstly, they do not use other sources of data, other than the interaction itself of the user with the virtual assistant such that the first interaction of any user with the virtual assistant is identical and starts from scratch without any personalization. In addition, virtual assistants of the prior art do not utilize the immediate context characterizing the particular situation in which the user finds themselves at the exact moment of making a request and which may mean that the same request from the same user may be based on different intentions and therefore may require different actions. It is therefore safe to say that there are no systems that fully utilize context data to optimize the interaction with the user.

US 2014/149562 A1 discloses an approach to manage bandwidth in a network.

### Description of the invention

To solve the above limitations of the prior art, the present invention proposes, according to a first aspect, a system for controlling personal data of a user of telecommunications networks, comprising: a database associated with a user of telecommunications networks adapted and configured to store data generated by the user while using the telecommunications networks and the services offered by said telecommunications networks; and to a data control module adapted and configured to make available to the user the data stored in the database.

The data control module is also adapted and configured to allow the user to manage the access permissions to the data stored in the database in accordance with different privacy levels established by the user and as a function of the potential consumer of the data and the purposes of said consumption; and the database gives the consumer of the data access to the data stored on the user according to the access permissions established by the user.

In order that the mentioned database stores the data generated by the user, all the data sources are previously identified which may be valued in isolation or in combination. This step involves connecting the different points of temporary capture or storage of these data with an infrastructure capable of making them available for their control and subsequent utilization. The data are generated on a large scale in the three previously mentioned levels and should be processed, generally in real time. This vast amount of data, framed within the paradigm of "big data", is stored in different databases and systems. The data are standardized and segmented by client creating, to that end, the mentioned database (or repository) containing all the data generated in each one of the three levels and which corresponds to the level of consent set by the user.

The data may come from connection logs of each user to different base stations, call detail records (CDRs), IP television consumption, websites visited, etc. which may be stored in different repositories/systems.

The database may contain, in addition to the information generated by the user while using the telecommunications networks and services, information on the permissions granted by the user for the different third parties and for what purposes, as well as information on the specific use that the third parties are making of the personal data of the user.

Characteristically according to the present invention, the database, in addition to storing the data generated by the user, can also store data obtained from sources external to the network and services of the telecommunications operator and not necessarily generated by the user, but which may be relevant for the user. On the one hand, data captured by the devices themselves of the user while interacting with the user or simple environmental or context data not linked to the interaction with the user may be stored. On the other hand, external data, which may, however, apply to or possibly affect the user, can be collected for example from a weather forecasting system or a notification system for natural disasters.

In addition, a virtual assistant (which may be integrated into the mentioned data control module) is included in the system proposed which is operatively connected to the database for accessing the data stored by the same. The virtual assistant maintains a contextual interaction with the stored data by means of:
a) determining the contextual domains applicable to the user based on the analysis of entities associated with the user including contracted services, devices and/or contacts with whom they interact;
b) contextualizing the domain based on historic activity data of the user collected from the interaction of the user with the telecommunications network and with the services of a telecommunications operator;
c) contextualizing the domain based on the history of other data relevant to the user but not related to their activity;
d) contextualizing the domain based on immediate context data characterizing the actual situation of the user; and
e) determining the user intent based on the contextualization of the previous steps and upon a specific request from the user (100).

The mentioned request from the user is preferably made in natural language.

The object of making available to the user the data stored in the database is, firstly, to make the user aware of the data generated by them and which may possibly be stored, processed and valued by the operator themselves or by third parties. Secondly, it allows the permissions granted by the user to be managed. These rights will derive from a proactive disclosure by the user or more frequently from reactive disclosure in response to a request by the operator. This offering may involve certain perks offered to the user in exchange for disclosure of their data, making them part of the value that the data provides to a third party. These perks may have various forms: they may be economic, such as for example discounts on the bill; in kind, such as for example increases to the mobile data allowance; or they may be intangible such as for example content recommendations in line with their preferences. Lastly, the data stored in the database allows the provision of services of the telecommunications operator to be optimized, or of an authorized third party, for example, by means of providing the mentioned virtual assistant based on user data, by way of which the user receives highly-personalized support with 24/7 availability. The present invention allows granular management of the permissions by the user. That is to say, the user can grant permissions in a differentiated manner for each type of data, for each specific use and for each potential consumer of their data.

The data control module (or control interface) allows the disclosure of the data as a direct sale model or under auction. In addition, the sharing of the previously disclosed data can be interrupted.

The user can opt for an automatic monitoring system that monitors the data collecting entities and deactivates certain third party tracking activities. This applies especially to data collecting actions carried out during the provision of services to the user, if they do not take measures to avoid it. The most obvious example would be the information collected by means of cookies by broker entities from the online advertising market who obtain a user profile based on these cookies and offer it as a selling point to potential advertisers who participate in the auctions for advertising spaces on the websites visited by the user.

The interaction between the user and the system of the present invention can take place by way of different user interfaces such as websites, applications or bots. The chat bots or robots are supported by natural language processing techniques to interact with the users, for example in a non-intrusive manner by way of messaging services and therefore constitute a preferred embodiment of the invention. However, other types of interfaces can perfectly fulfil the object of this invention, such as for example augmented reality interfaces. In fact, the preferred embodiment of this invention exhibits multiple human-machine interfaces available simultaneously such that the user or the system can select the most suitable one for each case and situation.

In one exemplary embodiment, the system also includes a repository for reward plans to store information concerning different compensation offered to the user in exchange for modifying said privacy levels. The compensation is offered to the user by way of the data control module. The compensation may depend on the type of data, the specific consumer of the data with respect to which the privacy levels are modified and the purpose for which the data will be utilized by said consumer. In addition, the compensation may depend on the degree of detail of the data.

The data control module, or more generally the virtual assistant based on user data, can offer the user intervention actions via the telecommunications networks and via the services offered by these telecommunications networks available to the user and subject to the confirmation from the user to request the telecommunications networks and services to execute said intervention actions.

The intervention actions for example can be used by the user to block tracking means while using the telecommunications networks and the services offered by the same. In addition, the intervention actions can be used by the user to uninstall a malicious application. The intervention actions can also be used by the user to optimize a WiFi connection or even to minimize the impact caused by adverts while browsing the Internet.

The present invention provides, according to a second aspect, a method of controlling personal data of a user of telecommunications networks comprising: storing, in a database associated with a user, data generated by the user while using telecommunications networks and the services offered by said telecommunications networks; and making available to the user the data stored in the database by way of a data control module.

In addition, the proposed method also comprises: managing, by the user, in the data control module, the access permissions to the data stored in the database in accordance with different privacy levels established by the user and as a function of the potential consumer of the data and the purposes of said consumption; and accessing, by the data consumer, the data stored in the database according to the access permissions established by the user.

According to the proposed method, the database also stores data obtained from sources of information external to the telecommunications network, not generated by the user. In addition, a virtual assistant accesses the stored data and maintains a contextualized interaction with the same.

In one exemplary embodiment, based on a user intent and all the contextualized interaction with the stored data, the method also comprises determining a combination of actions intended to provide a response to a request from the user.

In one exemplary embodiment, the data control module requests intervention actions from the user via the telecommunications networks and via the services offered by the same based on the stored data available to the user and subject to the confirmation from the user, the data control module requests the telecommunications networks and services to execute said intervention actions.

The mentioned intervention actions are preferably executed proactively when a pre-established condition relating to at least one of the data is met.

In one exemplary embodiment, the intervention actions are used by the user to block tracking means while using the telecommunications networks and the services offered by the same.

In one exemplary embodiment, the mentioned pre-established condition corresponds to detecting access to a URL unequivocally related to a malicious application, the mentioned intervention actions in this case being used by the user to uninstall said malicious application.

In one exemplary embodiment, a user profile is generated based on the data generated by the user while using the telecommunications networks and the services offered by the same. This user profile can include information derived and obtained based on two or more items of data from the user, for example combining them together and/or drawing conclusions based on the comparison of the same. Additionally or alternatively, the user profile can include information derived and obtained from the data of the user and external sources of data, for example combining them together and/or drawing conclusions based on the comparison of the same. Even the user profile can be shared with the data consumers based on the access permissions established by the user themselves. In this last case, according to an exemplary embodiment of the present invention, the data consumer is a web server and the user profile is shared during the process of accessing the web portal served by said web server.

In one exemplary embodiment, the user accesses data stored in the database relating to the status of a WiFi network of the user and the mentioned intervention actions are used by the user to optimize said WiFi connection. The data that the user accesses can comprise information on the devices connected to the WiFi connection and on the use that these devices are making of said connection and the intervention actions correspond to a change in the use permissions of the WiFi network of at least one of the devices.

For example, the mentioned change in the use permissions of the WiFi network of at least one of the devices may correspond to a denial of access to the WiFi network. Alternatively, in another example, the mentioned change in the use permissions of the WiFi network of at least one of the devices may correspond to a limitation in the maximum bandwidth allowed in the WiFi network.

In another exemplary embodiment, the user accesses the data stored in the database relating to the impact of the adverts on Internet browsing and the mentioned intervention actions are used by the user to minimize said impact of the adverts on Internet browsing. In this case, the data that the user accesses may comprise information on the amount of data downloaded that corresponds to adverts or to information on the delay in displaying websites due to the downloading of adverts, while the intervention actions may comprise activating a service for eliminating adverts on websites while browsing the Internet.

The present invention gives back control to the user over the data generated by them. The user firstly needs to be aware of the amount and variety of data that they produce, and know the potential use that can be made of said data and control, ex ante and explicitly, said utilization.

For example, the user should be aware of the data that are collected, aggregated and auctioned while browsing the Internet in relation to displaying personalized adverts to them and taking the pertinent actions such as controlling this flow of data as they desire and as is technically viable.

In addition, the present invention allows the telecommunications operator to more effectively utilize the specific data collected during the interaction of the user with their networks and with the digital services supported by the networks. In this way, the operator can manage their resources and investments in a more optimal manner and ensure excellent service for their clients. Additionally, the operator can optimize the interaction with the user, both in responding to calls or requests from the user or proactively when a combination of factors is detected that results in it being recommended that an interaction with the user be initiated without a prior request from the said user. The present invention optimizes the interaction with the user by means of a virtual assistant based on user data which, owing to artificial intelligence techniques, allows autonomous interlocution with the user. However, the present invention can also help to optimize other types of interactions in which a human assistant mediates, for example recommending actions which should be confirmed or adopted by the human assistant.

Additionally, the present invention allows a closer relationship to be created with the client whose user experience and their trust in the operator is improved and may also be rewarded for the utilization of their data. This relationship of trust between user and operator generates greater satisfaction in the user and greater retention of their clients for the operator.

The present invention allows effective data portability, that is to say that the data of the user can be retrieved from different repositories and telecommunications systems and services, can be easily transferred to a second system and then deleted from the original location. This allows for a system for managing end to end privacy controlled by the user themselves.

The present invention allows for the utilization or valuation of the data of the user. A first modality is utilization for an improvement to the service provided by the telecommunications operator. The information from the user can be utilized to offer personalized services to the user or to offer the user discounts or new services in accordance with their interests. Additionally, the operator can use the data to optimize their investments in infrastructure such that it can find the best fit for the needs of their clients.

Another modality of utilization is disclosure to third parties. This disclosure should be based on transparency towards the user who should know in detail the company requesting their data, the use it intends to make of the data and should have the option of denying, granting and even revoking permissions, always in a granular manner. The present invention allows a framework of trust to be established with the user such that they may be compelled to share their data for certain purposes with the confidence that the limitations that they impose will be respected. This tendency to share their data is linked, not only to this trust in the use that will be made of said data, but also in the value perceived by the client who receives said disclosure. This may be related to the compensation received by the user themselves as a result of the disclosure.

The present invention also allows for the intervention of the user via the telecommunications network and services based on the information, raw or processed, which the operator makes available to them. That is to say beyond the collection, management and disclosure of data and a framework is defined in which the user can act via the telecommunications network itself and the services in order to optimize them. These interventions can be, amongst other things, changes in the contracted service plans, such as for example an increase in the data allowances or correction of aspects which have a negative impact on the provision of service or on the consumption incurred, such as for example uninstalling applications that cause an excessive consumption of data or which are classified as malicious applications (malware).

### Brief description of the drawings

The above and other characteristics and advantages will be more fully understood based on the following detailed description of merely illustrative and non-limiting exemplary embodiments with reference to the drawings accompanying said description, in which:
Fig. 1 shows the architecture of a system for controlling personal data of a user of telecommunications networks according to an exemplary embodiment of the present invention. In this case, the multitude of personal databases associated with the different users of the telecommunications operator have been illustrated.
Fig. 2 shows the architecture of the system implemented by the present invention according to another exemplary embodiment.
Fig. 3 shows a flow diagram of the preferred embodiment of the method of the present invention based on the orchestration by the user data control module.
Fig. 4 shows a flow diagram of an embodiment of the method of the present invention in which the communication with the user is initiated from the data control module and in which the user decides to act via the network infrastructure and services of the operator.
Fig. 5 shows a flow diagram of an embodiment of the method of the present invention in which a user requests data on the status of the domestic WiFi network and requests optimization of the connection based on said data.
Fig. 6 shows a flow diagram of an embodiment of the method of the present invention in which the user checks the impact on their data connection of the adverts displayed while they browse the Internet and as a result of requesting them to be blocked.
Fig. 7 shows a diagram of a scenario in which a user activates anti-tracking and initiates anonymous browsing according to the teachings of this invention.
Fig. 8 shows a flow diagram of an embodiment of the method of the present invention with the aim of carrying out parental control with detection of malicious apps or websites.
Fig. 9 shows the detailed architecture of the system implemented by the present invention according to another exemplary embodiment.

### Detailed description of the invention and exemplary embodiments

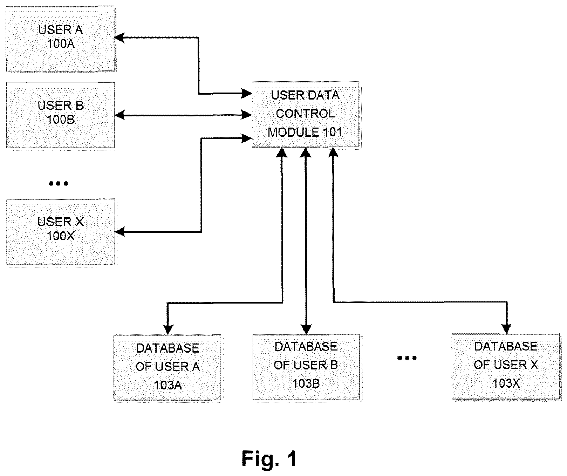

Fig. 1 shows the architecture of a system for controlling personal data of a user 100 of telecommunications networks according to an exemplary embodiment of the present invention. The system according to this exemplary embodiment comprises a user data control module 101, which is a central element to the architecture of the system of the present invention, responsible for interacting with the rest of the components of the architecture as an orchestrator. Additionally, the system comprises a personal database for each user 100 and therefore the user A will have a database 103A, the user B will have a database 103B and successively like this. These databases 103 store the data generated by their respective users while using the telecommunications networks and the services offered by said telecommunications networks.

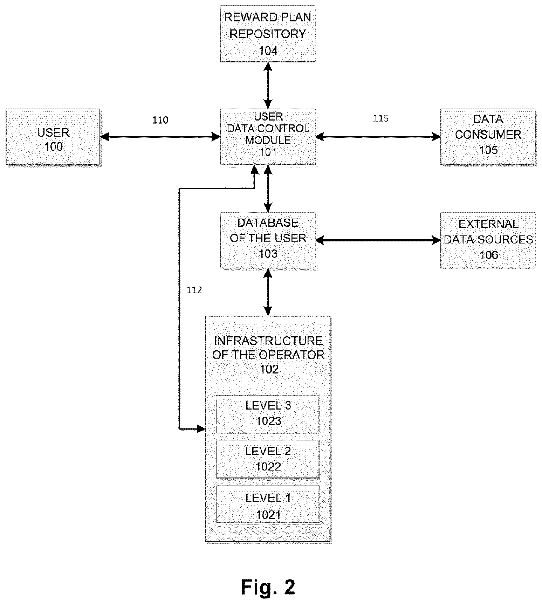

The mentioned data control module 101 is responsible for interacting bidirectionally with each user 100 and for making available to them the data stored in each database 103. Additionally, the data control module 101 allows the user 100 to manage the access permissions to the data stored in their database 103 in accordance with different privacy levels established by the user 100 themselves and as a function of the potential consumer of the data 105 (see Fig. 2) and the purposes of said consumption. Each database 103 allows access to the data stored by it on their respective user 100 to the user themselves and, in accordance with the access permissions established by the user, to different data consumers 105.

The human-machine interface 100 between the data control module 101 and the user 100 can take different forms as a function of the embodiment of the invention, the specific case of use or the user preferences. The preferred embodiment of the invention implements this human-machine interface in the most natural way possible according to the routines of the user 100, such as for example by means of a message conversation between the user and a bot (conversational robot) given that the users are accustomed to interacting with other users by way of said communication services. The data control module 101 can be seen by the user 100 as an alter ego who monitors the user's data stored and notifies the user when any anomalous effect is detected, when it has a suggestion that may facilitate the user's life or whom the user 100 may simply ask questions concerning their communications activity and their digital life.

With reference now to Fig. 2, another exemplary embodiment of a system for controlling personal data of a user 100 of telecommunications networks is shown. In addition to the previously-described elements, in this exemplary embodiment, the infrastructure of the operator 102 has also been illustrated, which comprises all the classic assets of a telecommunications operator distributed in the three levels previously described, that is to say, the first level with the physical assets of the operator 1021, the second level with the IT systems of the operator 1022 and the third level with the added-value products and services 1023. In these three levels of the infrastructure of the operator 102, the data are generated relating to the activity of the user while using the telecommunications network and the services offered by the mentioned telecommunications network which, by means of standardization and segmentation processes, are dumped and stored in the databases 103 of the different users.

The personal databases 103 not only store the data themselves, but in a preferred embodiment of this invention, they also store the permissions granted by the corresponding users to the different data. However, an alternative embodiment of the invention envisages the storage of these permissions in an independent storage location, what does not impact the result obtained with the invention.

Another integral component of the system of Fig. 2 is the reward plan repository 104, which stores information concerning the different compensation that can be offered to users 100 in exchange for the disclosure of their data. These rewards depend on various factors, such as, amongst others, the type of data and the degree of detail of the same, the specific consumer of the data, the purpose for which the data will be utilized or the consumption profile of the user of the services of the operator and of third parties. The rewards can be fixed or depend on an auction of the data among the potential consumers and can take different forms, such as they can be discounts on the bill, additional services provided free of charge, discounts for new services, service or content recommendations or simply providing the information in a format easily consumable by the user or which gives them value.

In addition, user data consumers 105 are also found in Fig. 2, which are the entities who have an interest in accessing the data of the users and giving them value. Normally, these are third parties, external to the operator, although the operator itself can also take on this role in certain cases. Communication between the consumers 105 and the data control module 101 is carried out by means of interfaces (APIs) previously agreed between the parties 115.

In addition to the data extracted from the infrastructure of the operator 102, the database 103 can retrieve data from external sources of data 106 and store them together with the rest of the data.

In addition to being able to interact with the data control module 101 in order to access the data and permissions stored in their database 103, the user 100 can also check the compensation available for disclosing their data which is retrieved by the data control module 101 from the reward plan repository 104, filtered according to the characteristics of the user 100 and displayed to the user.

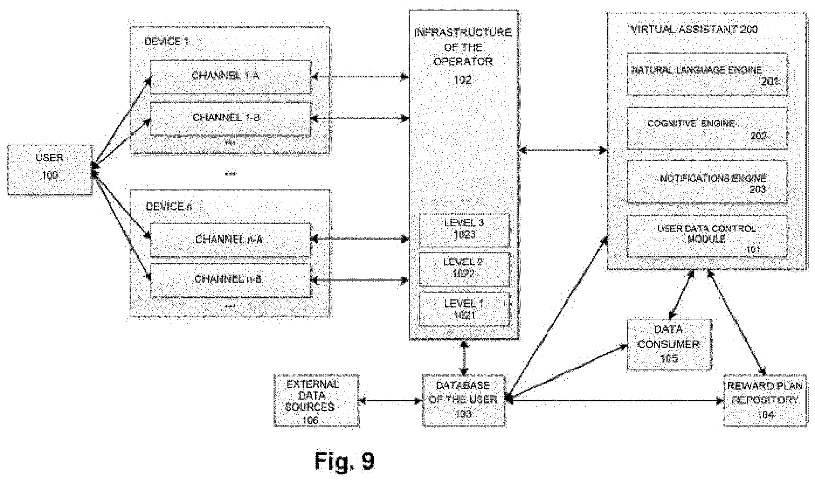

Fig. 9 constitutes the architecture of another exemplary embodiment of the present invention in which the virtual assistant 200 is shown based on user data (hereinafter virtual assistant, for simplicity) as a macro system that encompasses the data control module 101 and which also consists of a preferred consumer of the data of the user database 103. The virtual assistant 200 comprises various subsystems among which stand out, aside from the already mentioned data control module 101, the following: the natural language engine 201 is responsible for analyzing the data that has the form of natural language and specifically the interactions of the user with the virtual assistant or other systems and services of the telecommunications operator or a third party, whether oral or written. Said engine is also capable of generating texts to respond or notify the user when they proceed. On the other hand, the cognitive engine 202 is the one that incorporates intelligence into the virtual assistant 200, determining the context in which a user request is set and the potential actions to be executed or proposed in response. The cognitive engine 202 can also determine the convenience of executing actions proactively without having to request anything from the user 100, but merely an update to one or more items of data that are relevant to them. Any interaction of the virtual assistant 200 requiring a notification to the user is supported by the notification engine 203 that determines the best channel and time to send said notification to the user.

Details of the interaction between the user 100 and the rest of the elements can also be observed in Fig. 9. In effect, each interaction is carried out by way of a device and a specific channel. The same user may have multiple devices, for example, a landline telephone, a smartphone, a smart TV and a PC. Multiple channels can be used in each device. For example, in a smartphone, the user can interact with the virtual assistant 200 by means of voice call, by means of SMS messaging, by means of an application, etc. The user selects a device and a channel for each interaction with each one of the systems and services of the infrastructure of the operator as well as for each interaction with the virtual assistant 200. For simplicity, in the diagram, it is assumed that the interactions of the user 100 both with the virtual assistant 200 and with the data control module 101 are carried out by way of the infrastructure of the operator 102.

The personal database 103 defines the individualized context for each one of the users of the system. Unlike other systems of the prior art, the database 103 of this system uses a unique information structure to store all information relating to the context applicable to a user in the system. That is to say, it brings together all the information that may be applicable to a user, that has already been generated by the user themselves during their interaction with the network, services and with the virtual assistant 200 itself, or it is information not generated by the user themselves, but which may be relevant to the user. Therefore, this database 103 facilitates, in a uniform manner, a holistic view of each user structured based on the information that the system is capable of providing on the user.

When the user 100 interacts with the virtual assistant 200, it is possible to retrieve their profile immediately and incorporate it into the processes of analyzing the natural language and determining the action plan required to generate the response. If it is necessary to retrieve the detail of any of the relationships registered in the database 103 to complete any of these processes, it will always be possible to utilize the high availability of the data in the system to access the information.

The information stored in the database 103 includes the information relating to the entities that have a semantic character for the telecommunications operator, for example users of the network and services of the same or devices of said users as well as the relations and interactions among all these entities. This means that each time an event is produced in the system, on any of the platforms and levels composing it, the information on the event is registered in the database 103 and the relation between the entities taking part in said event is also registered. This makes it possible to extract a complete user profile of each user from the system.

The information stored by the database 103 also includes the information corresponding to the interaction with the virtual assistant 200. Given that said system facilitates the interaction based on natural language, the system also allows the identification of entities and relationships with one another based on the analysis of the language. This means that the more the user interacts, the more developed the profile that allows their presence in the system to be modelled will be, and the more adapted the experience for each interaction will be.

The virtual assistant 200 has two levels of contextualization. The first is derived from the analysis of all the entities present in the profile of each user. This allows to know who this user is for the organization offering the virtual assistant service and what domains are applicable to the user for the personalization and contextualization process. For example, in the case where the virtual assistant 200 is offered by a telecommunications operator, this first level of personalization would include the services contracted by the user 100. In the case where the user 100 had contracted the television service, the audiovisual services domain would be active for each user 100. Said domain will encompass a catalogue of various possible requests on the part of the user 100 (request for the video on-demand catalogue, request for recommendations, etc.) as well as a combination of possible actions. The domain of network administration will be active for those users who have contracted a network service (for example fixed broadband) and will take into account another different catalogue of possible requests from the user (guest WiFi network administration, network diagnostic, etc.) as well as possible actions (for example creating guest WiFi and asking the user for the desired password).

The second level of managing the context of the virtual assistant 200 is based on the detailed data themselves. In this second level, it is possible to, in turn, establish two types of data applicable to the context: on the one hand there is the detail of all the relationships collected in the database 103. For example, the records of calls that the user 100 has made to another user B, when they were conducted and from what geographic locations. This information determines a context in which the interaction of the user 100 and the other user B takes place and can be used to infer knowledge of the activity of the user 100 and adapt the responses to their needs. Another example would be the interaction of the user 100 with their TV decoder, which provides more information concerning the user 100. In addition, it is also possible to retrieve the instantaneous context of the interaction, which provides information on what aspects surround the interaction. This type of information can be retrieved directly from the channel that the user 100 uses to perform this interaction and may be data collected directly by the device used to implement this channel, such as for example the software which allows the interface offered by said device to the user 100 to be defined. One example is that the user 100 contacts the virtual assistant 200 from their smartphone, but of the information extracted from said device, for example "only device connected to the home WiFi" as well as from the TV decoder "decoder switched on and showing series catalogue", therefore enriching the immediate context of the user 100 which helps to estimate the real intention of the user 100 in their request as well as determining the best action to carry out in light of said request. This information enriched with context therefore not only allows the response to be adapted to the user 100, but also to the specific circumstances in which the user 100 finds themselves when said interaction is produced.

In addition, the system of the present invention utilizes the context not only to determine, in the most reliable manner possible, the intention of the user 100 (user intent), but also, once said intention is determined, to determine, in the most optimal manner, the series of actions to be carried out. The context information is therefore introduced into the system at two points, first in the process of identifying the user intent and second in determining actions associated with a user intent. The system therefore recognizes that the same intention of the user 100 (user intent) may involve a set of different actions as a function of the specific context.

It is important to note that the system can provide the users with a personalized and contextual experience not only when the interaction is initiated by the users. The system envisages that, after an event is produced in any of the infrastructures, systems or services of the operator and/or the organization providing the virtual assistant 200, the system allows for the management of a notification initiating the interactions with the users. The database 103 contains all the information required to determine whether the change in conditions actually affects the user 100 and will collect the notification configuration desired by the user 100 in order to send said notifications to the user by way of the most suitable channels of those that are available.

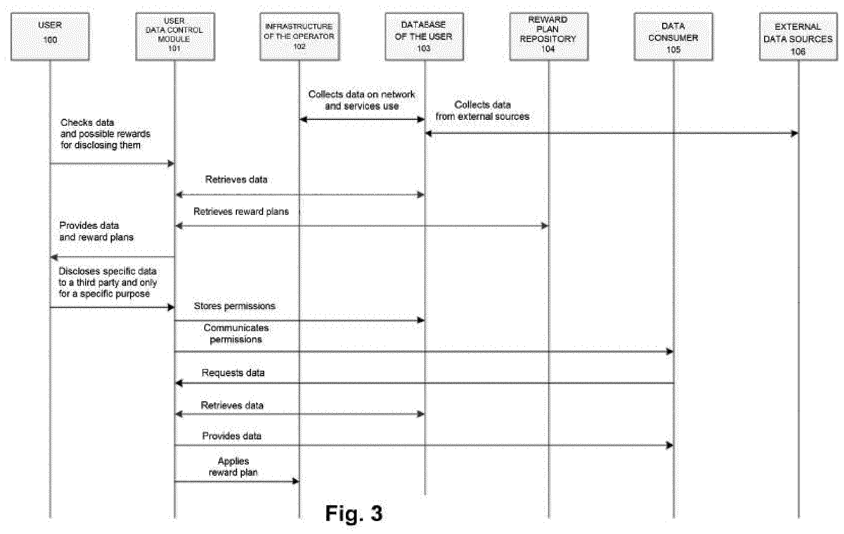

Now with reference to Fig. 3, it shows a flow diagram of a preferred embodiment of the method of the present invention. In a first step, the database 103 is supplied with data coming from the operator's infrastructure 102. Although in the figure, this has been represented as a single event, in reality it is a continuous process in time. The generation of data is continuous and its transfer to the database 103 should be too, whether in real time when the data are generated or in batches. The database 103 can also retrieve information from external sources of data 106 periodically or upon request when it is required for a specific action.

At a determined time, the user 100 decides to check the information available in their database 103 and the reward plans available if they disclose them. To this end, the user interacts with the data control module 101 which retrieves information both from the database 103 and the reward plan repository 104 and supplies it to the user 100. The user 100 analyses it and decides to disclose a subset of their data to a third party. To do so, they inform the data control module 101, which is responsible for storing the permissions in the database 103 and notifying the authorized data consumer 105. The data consumer 105 then requests the data by way of the data control module 101 which interacts with the database 103 to check that the consumer 105 has the permissions required and retrieves said data, which are then transferred to the authorized consumer 105. The data control module 101 then requests the infrastructure of the operator 102 to apply the corresponding reward plan.

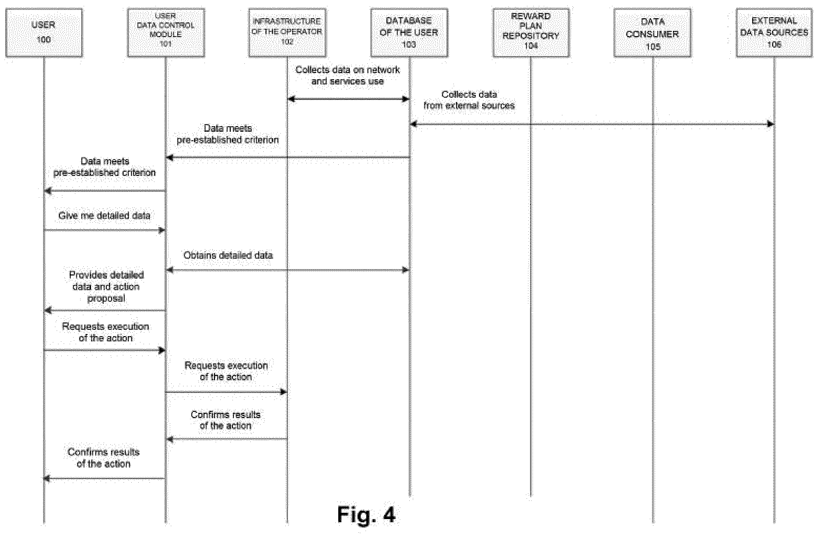

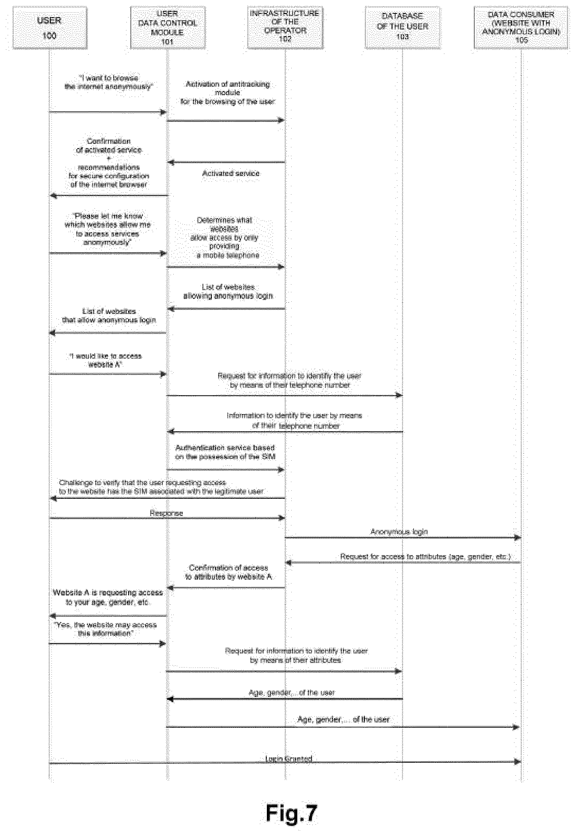

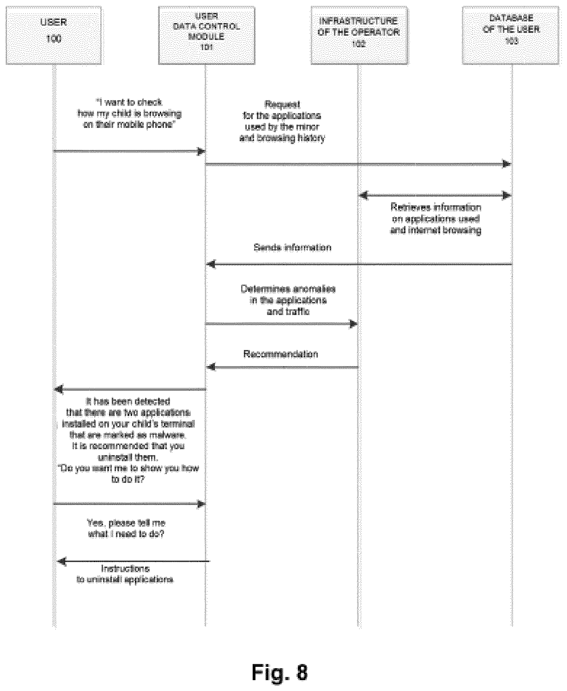

It should be noted that Fig. 3 can be easily modified to be adapted to the architecture of the embodiment of Fig. 9, replacing the data control module 101 with the virtual assistant 200, since in said embodiment, the tasks of the data control module 101 are assumed by the virtual assistant 200. The same applies to the scenarios represented in Figures 4, 5, 6, 7 and 8.

Now with reference to Fig. 4, this shows a complementary scenario to the one before (Fig. 3) in which communication does not occur spontaneously from the client 100, but rather it is the data control module 101 that proactively contacts the client 100 and initiates the process. The first steps of this flow, relating to the data communication from the infrastructure of the operator 102 and data sources 106 external to the database 103, coincide with those from Fig. 3. However, it is then the database 103 that sends a notification to the data control module 101, indicating to it that a certain item of data has been updated and meets a pre-established criterion, for example the consumption of mobile data has exceeded a determined limit. The data control module 101 notifies the user 100 who then requests detailed information on the notified event from the data control module 101, which retrieves it from the database 103 and provides it to the user 100. This additional information can be, in the case of the previous example, information on data consumption by the different apps installed on the smartphone and a proposal for corrective measures, such as uninstalling specific applications. The user 100 decides to carry out an action, for example increasing their data allowance or requesting the uninstallation of the app with high data consumption which they communicate to the data control module 101 which interacts with the infrastructure of the operator 102 to execute it. The infrastructure of the operator 102 communicates the result of the action to the data control module 101 which relays it to the user 100.

There are different variations on the implementation of the method of the invention which allow the object of the same to be achieved. Additionally, different specific problems may be solved owing to the present invention by means of selecting and combining a specific set of input data and applying a series of actions as a result of the analysis of said data. The most relevant embodiments of the invention are described below.

### Creating and utilizing a user profile:

Every user 100 generates a multitude of data while interacting with the telecommunications network and the services. A significant proportion of the events generated by the user 100, especially by using their smartphone, relates to localized events. This is due to the ability of the mobile network to locate each terminal connected to said network, based on the location of the base stations of the mobile network close to the user terminal and techniques such as triangulation. Additionally, another type of information such as for example the websites visited, the applications used or the audiovisual content consumed help to develop a user profile modelling the interests and preferences of the user. This profile therefore contains not only raw information obtained from the interactions of the user 100, but also processed information obtained based on cross-referencing different items of data collected on the user 100 and even cross-referencing it with external sources of data 106. For example, the location data on the different days of the week and time periods can be used to determine the residence, the workplace of the user and how they travel from one to another. Additionally, said information can be cross-referenced with the public data from the land registry and thereby determine the typology of the residence in which the user 100 lives. It should be stressed that the ultimate aim of the present invention is to maintain the privacy of the user 100 to the extent that the user 100 themselves desires this and therefore none of this information is supplied without express permission from the user 100.

Said user profile is highly-valued by different actors, such as for example advertising services brokers who, when they have this information, can sell advertising spaces in a manner more targeted at each type of user, achieving a higher click through rate or sell through rate which allows them to charge higher prices for them.

The present invention allows the user 100 to control what information from their profile is supplied and to which specific actors. In addition, part of the benefits obtained by valuing their profile can be returned to the user 100.

This embodiment corresponds to what was described in Fig. 3. Alternatively to the proactive checking by the user 100, the data control module 101 can be directed to the user 100 in the first instance, informing the user of the personal profile stored in their database 103 and the possible rewards for disclosing it.

### Checking the status of the WiFi network and optimization of the same:

In the following embodiment, the present invention is used by the user 100 to connect and subsequently check the status of their domestic WiFi and to optimize it. Firstly, the user decides to request that the WiFi network in their home be switched on. The virtual assistant 200 provides the option of carrying out this interaction using multiple channels and, amongst other options, by means of natural language. However, a uniform experience can be offered in terms of the making requests and obtaining the responses. The user 100 can for example open a specific application of the virtual assistant 200 on their smartphone and say "switch on Internet". The system, based on the information collected in the database of the user 103, determines at a first level of personalization who the requesting user is and that they have contracted a package with fixed landline and broadband and mobile telephone and broadband. At a second level of personalization, the immediate context is detected, comprising the channel by way of which the request is made, the location of the user 100, who is at home, the status of their data connection to the mobile network that is activated. Based on all this context information, the system deduces that the user (100) intent is to activate the domestic WiFi. To this end and again based on the information available in the database 103, an action plan is generated which allows interaction with the communications infrastructure that the user 100 has contracted and enables access to the Internet by way of their WiFi router.

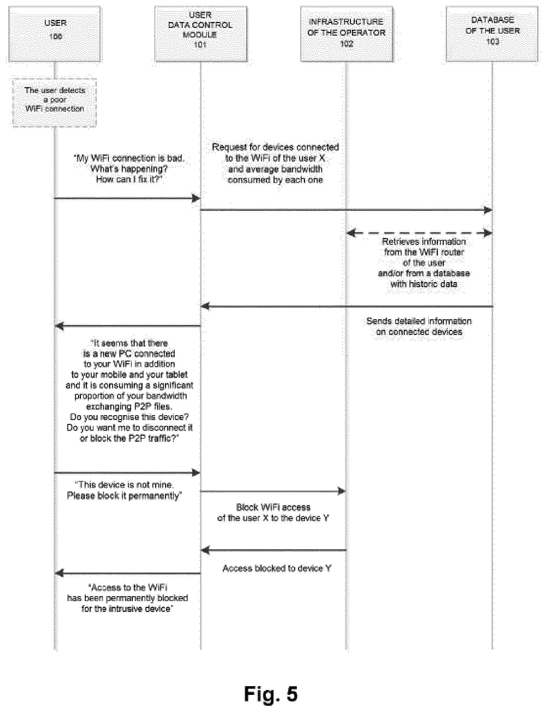

As can be seen in Fig. 5, the user can subsequently detect a poor data connection in the WiFi connection and initiate an additional interaction with the data control module 101. In this case, the interaction is initiated by the user 100 by means of messaging, using natural language, with the data control module 101. The user accesses the database 103, which either already contains data on the WiFi connection of the user 100, which has been previously stored or alternatively retrieves this information dynamically from the WiFi router of the user 100 and/or from a database with the history of this information (alternative representation in the figure). The data control module 101 communicates the available information to the user 100, including the number of connected devices and the type of each one. Additionally, the data control module 101 indicates that one of the devices connected may not be from the user 100 themselves. For each device, the bandwidth consumed is determined and it is determined which of these is the one causing a deterioration in the connection. Based on context information, which includes what devices belong to the user 100 or to relatives and are normally connected to the domestic network, the data control module 101 (the cognitive engine of the virtual assistant according to Fig. 9) can determine that a device, external to the area of the user 100, is the one that is causing these problems. In light of this fact, the data control module 101 can present different actions to the user 100, including the option to disconnect said device. The user 100 can decide to remove it from their infrastructure, giving the command to the data control module 100 which transmits it to the network systems controlling the router. This case is an example of the bidirectionality of the present invention which, on the one hand, facilitates, in a manner adapted to the needs of the user 100, information relating to the technical aspects concerning to the services that the user has contracted and, on the other hand, allows the user 100 to interact transparently and conveniently with the systems providing support for these services.

Additionally, the detection of an intrusive device into the domestic WiFi network can be carried out by the system without prior request from the user 100. Based on the information that is collected in the database of the user 103, the system can establish which devices are related to a specific user and to a router. When the system detects that an unexpected device has connected to the WiFi of the home of the client, an event can be generated with this fact, which would be translated into a notification. This notification could be sent to the user 100 by the channel that they expect or desire, informing them of the presence of this unexpected device and proactively suggesting what courses of action may be followed from this point (e.g. blocking the device, allowing the connection, transferring it to a guest WiFi, etc.). The system can make use of enriched context information determining to whom the device, unexpectedly connected to the WiFi network, belongs and cross-referencing it with the call and messaging log of the user 100. In the case where it is detected that the device belongs to a regular contact of the user 100, an action can be predetermined (e.g. allowing the connection) over the other actions or it can be decided that it is not necessary to notify the user 100, taking their preferences as a basis.

Additionally, the system can evaluate whether this is causing a leak of personal information through the router. To this end, it is necessary to add to the evaluation which devices are connected, the analysis of the traffic that they generate to deduce to what extent a leak of sensitive personal information is happening. This analysis of the traffic can be carried out by the router, which could register the relevant information obtained in the analysis in the database 103. The system generates notifications when it is relevant, which are sent to the user 100 according to the previously described scheme. These notifications can provide information on the device and specific applications, on all of those that the user 100 has installed on these devices which are causing the leak of information.

In all these cases, it is the user 100, as previously mentioned, who maintains control over the sources of information that can be used to give functionality to a specific purpose.

### Managing adverts on the mobile device:

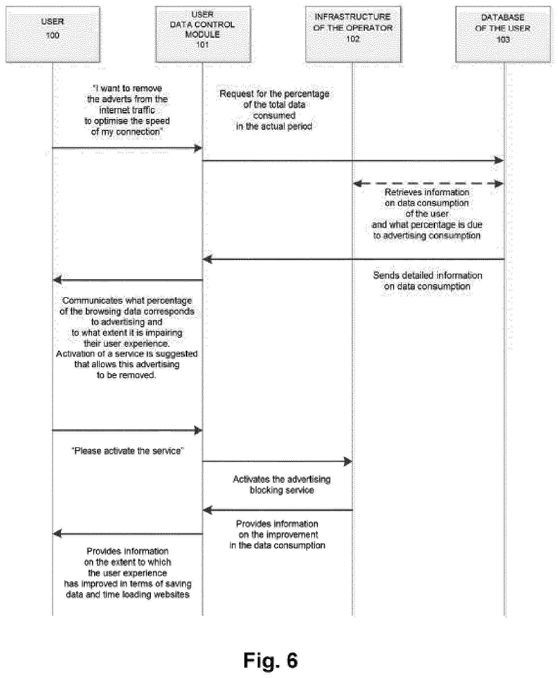

In an additional embodiment, represented in Fig. 6, the user 100 becomes aware that the somehow intrusive advertising, that they receive aggregated with the websites that they visit, consumes part of their data tariff and causes delays which impair their user experience when browsing. They then decide to interact with the data control module 101 to check the extent of the problem and to see whether there is a solution for it. The data control module 101 checks this information with the database 103, which is updated constantly with detailed parameters relating to the browsing of the user 100. The data control module 101 indicates to the user 100 the amount of data that has been consumed in the current billing period due to the adverts, which make up a non-negligible part of the data allowance contracted by the user 100. Additionally, the data control module 101 informs the user 100 that the request of cookies and downloading of adverts is delaying the display of the websites visited on average by a determined amount of time, which results in a degradation to the service perceived by the user 100. The data control module 101 provides information on a value-added service provided by the operator itself which the user 100 can activate and which would solve the problem, eliminating the disturbing advertising and increasing the browsing speed. The user 100 requests the activation of the service, what results in the data control module 101 requesting the infrastructure of the operator 102 to put this service into operation, immediately improving the user experience as a consumer of the services provided by the telecommunications operator.

### Anti-tracking and anonymous online purchasing:

In another embodiment, the user 100 detects the risk with respect to the privacy of their personal data when accessing certain web content and requests the data control module 101 to safeguard their privacy, activating anonymous browsing. The data control module 101 requests the infrastructure of the operator 102 to activate an anti-tracking system and to send indications to the user 100 so that the browser they are using to access the Internet is configured correctly. Additionally, the user 100 can request information on websites allowing anonymous access with a specific scope (for example electronic commerce). A report of websites integrating technology that allows the access (login) providing only the telephone number is sent to the user from the data control module 101. This technology is an added-value service (level 3) but in which the SIM (level 1) plays a critical role, given that it operates by means of a challenge which is sent to the mobile terminal of the user 100 which, once accepted and validated, guarantees access to the services, preferably websites incorporating this authentication technology. These services can request certain information relating to the user 10 to adapt the commercial offering. As a result, the data control module 101 proactively interacts with the user 100 to ask them whether they consent to certain information (for example, gender, age and TV profile) being accessible by the website on which they have been authenticated. The user 100 is thereby given the possibility of controlling what information is accessed by whom and opens up the possibility of building services in which the user 100 can benefit from the disclosure of personal information.

### Parental control system with malicious app or website detection:

In an additional embodiment, the user 100 contacts the data control module 101 to activate a parental control service over the device that their child uses, requesting a report of any suspicious situation or activity. To this end, the data control module 101 requests an identification of the applications that the user 100 has active and of the websites visited. In order to infer from the network the applications used by the user 100, it is necessary to have a trace of the different applications, for example cross-referencing the data defining the mobile applications with the data stored on the HTTP traffic and the DNS queries. In a first approximation, if an application, during its execution on the terminal, is connected to a specific URL and it occurs that this URL appears unequivocally related to a single application of the application marketplace; then if the traffic data of a specific terminal contains said URL, it would be possible to deduce that this terminal has said application installed. Once the applications used by the user's child 100 have been identified, they are cross-referenced with an (internal or external) database that classifies the applications, indicating whether this is malware or the age range for which they are recommended. In the case where an unrecommendable situation is identified, the data control module 101 would proactively notify the user 100, proposing corrective measures, such as the uninstallation of the conflicting applications. Once confirmed by the user 100, the corresponding request is sent to the infrastructure of the operator 102, who either executes it directly or gives the exact instructions so that the user 100 does so.

A person skilled in the art could introduce changes and modifications to the exemplary embodiments described without departing from the scope of the invention as defined in the accompanying claims.

## Claims

1. A system for controlling the personal data of a user and for optimizing the access management to a telecommunications network, comprising:
- a database (103) associated with a user (100) of telecommunications networks adapted and configured to store data generated by the user (100) during use of the telecommunications networks and of the services offered by said telecommunications networks, and to store data obtained from information sources external to the telecommunications networks not generated by the user (100);
- a data control module (101); and
- a virtual assistant (200) included in said data control module (101) and operatively connected to the database (103) for accessing the data stored by the same,
wherein
- the data control module (101) is adapted and configured to make available to the user (100) the data stored in the database (103) and to allow the user (100) to manage the access permissions to the data stored in the database (103) in accordance with different privacy levels established by the user (100) and as a function of a potential consumer of the data (105) and the purposes of a consumption, wherein the database (103) gives said consumer of the data (105) the access to the data stored on the user (100) according to the access permissions established by the user (100); and
- said virtual assistant (200) is adapted and configured to:
- maintain a contextual interaction with the stored data by means of:
a) determining contextual domains applicable to the user (100) based on the analysis of entities associated with the user (100) including contracted services, devices and/or contacts with whom they interact, wherein said contextual domains comprise at least one audiovisual services domain and a network administration domain;
b) contextualizing the domain based on historic activity data of the user (100) collected from the interaction of the user (100) with the telecommunications network and with the services of a telecommunications operator;
c) contextualizing the domain based on history of other data relevant to the user (100) but not related to their activity;
d) contextualizing the domain based on immediate context data characterizing the actual situation of the user (100); and
e) determining the intention of the user (100) based on the contextualization of the previous steps and upon a request from the user (100); and
- optimize a network connection of the user (100) by carrying out the following steps:
▪ receiving a request from the user (100) to determine the cause of a poor network connection in a network of the user (100);
▪ determining that the user (100) has contracted at least one network service and therefore applies the network administration contextual domain to the user;
▪ contextualizing the network administration domain based on historical activity data of the user (100) comprising the call and messaging record of the user (100);
▪ communicating to the user (100) the number of devices connected to the network of the user (100) and a type of each one;
▪ determining the bandwidth consumed by each of said connected devices and which of them is the one causing a deterioration in the connection; and
▪ determining, based on context information, including what devices belong to the user (100) or to relatives, that the device causing the deterioration in the connection is external to the area of the user (100), and presenting different options for action to the user (100), one of the options being the option to disconnect said device, the data control module (101) upon reception of a command from the user (100) to disconnect said device being further configured to remove said device from the infrastructure of the user (100) by means of transmitting said command to a network system.

2. The system according to claim 1, wherein that the network connection comprises a WiFi connection.

3. The system according to claim 1, wherein said request from the user (100) is carried out in natural language and the data not generated by the user (100) comprises environmental data and/or context data.

4. The system according to claim 1, further comprising a reward plan repository (104) adapted and configured to store information concerning different compensation offered to the user (100) for modifying said privacy levels, wherein said compensation is offered to the user (100) by way of the data control module (101), wherein the compensation depends at least on the type of data, the specific consumer (105) of the data with respect to which the privacy levels are modified and on the purpose for which the data will be utilized by said consumer (105).

5. The system according to claim 1, wherein said data come from a set of data stores associated with a variety of elements of the telecommunications networks and elements required to offer services via said telecommunications networks which store the data for purposes associated with providing the services.

6. A method for controlling personal data of a user and for optimizing the access management to a telecommunications network, the method comprising:
- storing in a database (103) associated with a user (100) data generated by the user (100) while using telecommunications networks and the services offered by said telecommunications networks, and data obtained from information sources external to the telecommunications networks, not generated by the user (100); and
- accessing, by a virtual assistant (200) including a data control module (101), the data stored by the database (103) and maintaining a contextual interaction with the stored data;
wherein:
- said data control module (101) makes available to the user (100) the data stored in the database (103), and allows the user (100) to manage the access permissions to the data stored in the database (103) in accordance with different privacy levels established by the user (100) and as a function of a potential consumer of the data (105) and the purposes of a consumption, and to access the data stored in the database (103) according to the access permissions established,
wherein:
- said contextual interaction is performed by:
a) determining contextual domains applicable to the user (100) based on the analysis of entities associated with the user (100) including contracted services, devices and/or contacts with whom they interact, wherein the contextual domains comprise at least one audiovisual services domain and a network administration domain
b) contextualizing the domain based on historic activity data of the user (100) collected from the interaction of the user (100) with the telecommunications network and with the services of a telecommunications operator;
c) contextualizing the domain based on history of other data relevant to the user (100) but not related to their activity;
d) contextualizing the domain based on immediate context data characterizing the actual situation of the user (100); and
e) determining the intention of the user (100) based on the contextualization of the previous steps and upon a request from the user (100), and
- the virtual assistant (200) optimizes a network connection of the user (100) by carrying out the following steps:
▪ receiving a request from the user (100) to determine the cause of a poor network connection in a network of the user (100);
▪ determining that the user (100) has contracted at least one network service and therefore applies the network administration contextual domain to the user;
▪ contextualizing the network administration domain based on historical activity data of the user (100) comprising the call and messaging record of the user (100);
▪ communicating to the user (100) the number of devices connected to the network of the user (100) and a type of each one;
▪ determining the bandwidth consumed by each of said connected devices and which of them is the one causing a deterioration in the connection; and
▪ determining, based on context information, including what devices belong to the user (100) or to relatives, that the device causing the deterioration in the connection is external to the area of the user (100), and presenting different options for action to the user (100), one of the options being the option to disconnect said device, the data control module (101) upon reception of a command from the user (100) to disconnect said device being further configured to remove said device from the infrastructure of the user (100) by means of transmitting said command to a network system.

7. The method according to claim 6, wherein the network connection comprises a WiFi connection and in that the virtual assistant (200), prior to optimizing the network connection of the user (100), activates the network of the user (100) by carrying out the following steps:
- receiving a request from the user (100) to switch on the network of the user (100);
- determining that the network services contracted by the user (100) include fixed broadband and mobile broadband;
- determining immediate context data comprising the channel by way of which the request is made, the location of the user (100) and a status of their mobile network;
- determining that the intention of the user (100) is to activate their domestic network when said immediate context data determine that the user is in their residence and that the mobile network is activated; and
- enabling access to the Internet by interacting with the communications infrastructure that the user (100) has contracted.

8. The method according to claim 6, wherein the virtual assistant (200) also detects malicious applications over a device operated by a user controlled by the user (100) by carrying out the following steps:
- receiving a request from the user (100) to activate a parental control service;
- identifying the applications that said user controlled by the user (100) has active and the websites visited based on data stored on HTTP traffic and DNS queries;
- determining an unrecommendable situation if at least one application of said applications identified is characterized as malware or based on the age range for which said application is recommended; and
- uninstalling the application upon displaying to the user (100) different corrective options, one of the options being the option to uninstall and upon conformation by the user (100).

9. The method according to claim 6, wherein the request from the user (100) is carried out in natural language and the data not generated by the user (100) comprises environmental data and/or context data.

10. The method according to claim 6, further comprising offering the user (100), by means of the data control module (101), different compensation in exchange for modifying said privacy levels, wherein in that the compensation depends at least on the type of data, the specific consumer (105) of the data with respect to which the privacy levels are modified and on the purpose for which the data will be utilized by said consumer (105).

11. The method according to claim 6 or 10, wherein said data come from a set of data stores associated with a variety of elements of the telecommunications networks and elements required to offer services via said telecommunications networks which store the data for purposes associated with providing the services.

12. The method according to any one of preceding claims 6 to 11, comprising generating a user profile based on the data generated by the user (100) while using the telecommunications networks and services offered by the same.

13. The method according to claim 12, wherein the user profile includes information derived and obtained from two or more of said items of data of the user (100).

14. The method according to claim 12 or 13, wherein the user profile also includes information derived and obtained from data of the user (100) and external data sources (106).

15. The method according to claim 12, 13 or 14, wherein the user profile is disclosed to a data consumer (105) based on the access permissions established by the user themselves (100).

## Patentansprüche

1. System zum Steuern der persönlichen Daten eines Benutzers und zum Optimieren der Verwaltung des Zugriffs auf ein Telekommunikationsnetzwerk, das Folgendes umfasst:
- eine Datenbank (103), die mit einem Benutzer (100) von Telekommunikationsnetzwerken verknüpft und dazu angepasst und ausgelegt ist, Daten zu speichern, die vom Benutzer (100) während einer Verwendung der Telekommunikationsnetzwerke und der von den Telekommunikationsnetzwerken angebotenen Diensten erzeugt werden, und Daten zu speichern, die von Informationsquellen außerhalb der Telekommunikationsnetzwerke erhalten und nicht vom Benutzer (100) erzeugt werden;
- ein Datensteuermodul (101) und
- einen virtuellen Assistenten (200), der im Datensteuermodul (101) beinhaltet und zum Zugreifen auf die in der Datenbank (103) gespeicherten Daten mit derselben wirkverbunden ist,
wobei
- das Datensteuermodul (101) dazu angepasst und ausgelegt ist, die in der Datenbank (103) gespeicherten Daten für den Benutzer (100) verfügbar zu machen und es dem Benutzer (100) zu erlauben, gemäß verschiedenen vom Benutzer (100) festgelegten Datenschutzstufen und in Abhängigkeit von einem potenziellen Verbraucher der Daten (105) und den Zwecken eines Verbrauchs Zugriffsberechtigungen für die in der Datenbank (103) gespeicherten Daten zu verwalten,
wobei die Datenbank (103) dem Verbraucher der Daten (105) den Zugriff auf die über den Benutzer (100) gespeicherten Daten gemäß den vom Benutzer (100) festgelegten Zugriffsberechtigungen gewährt; und
- der virtuelle Assistent (200) zu Folgendem angepasst und ausgelegt ist:
- Aufrechterhalten einer Kontextinteraktion mit den gespeicherten Daten mittels Folgendem:
a) Bestimmen von für den Benutzer (100) geltenden Kontextdomänen auf Basis der Analyse von mit dem Benutzer (100) verknüpften Entitäten, die vertraglich vereinbarte Dienste, Vorrichtungen und/oder Kontakte, mit denen sie interagieren, beinhalten, wobei die Kontextdomänen mindestens eine audiovisuelle Dienstdomäne und eine Netzwerkadministrationsdomäne umfassen;
b) Kontextualisieren der Domäne auf Basis von historischen Aktivitätsdaten des Benutzers (100), die aus der Interaktion des Benutzers (100) mit dem Telekommunikationsnetzwerk und mit den Diensten eines Telekommunikationsanbieters gesammelt werden;
c) Kontextualisieren der Domäne auf Basis einer Historie von anderen Daten, die für den Benutzer (100) relevant sind, sich aber nicht auf dessen Aktivität beziehen;
d) Kontextualisieren der Domäne auf Basis von unmittelbaren Kontextdaten, die die tatsächliche Situation des Benutzers (100) charakterisieren; und
e) Bestimmen der Absicht des Benutzers (100) auf Basis der Kontextualisierung der vorherigen Schritte und auf Anforderung vom Benutzer (100) und
- Optimieren einer Netzwerkverbindung des Benutzers (100) durch Ausführen der folgenden Schritte:
■ Empfangen einer Anforderung vom Benutzer (100) zum Bestimmen der Ursache einer schlechten Netzwerkverbindung in einem Netzwerk des Benutzers (100);
■ Bestimmen, dass der Benutzer (100) mindestens einen Netzwerkdienst vertraglich vereinbart hat, und daher die Netzwerkadministrationskontextdomäne auf den Benutzer anwendet;
■ Kontextualisieren der Netzwerkadministrationsdomäne auf Basis von historischen Aktivitätsdaten des Benutzers (100) die den Anruf- und Messagingdatensatz des Benutzers (100) umfassen;
■ Kommunizieren der Anzahl von Vorrichtungen, die mit dem Netzwerk des Benutzers (100) verbunden sind, und einer Art von jeder an den Benutzer (100);
■ Bestimmen der von jeder der verbundenen Vorrichtungen verbrauchten Bandbreite und, welche von ihnen die ist, die eine Verschlechterung der Verbindung verursacht; und
■ Bestimmen auf Basis von Kontextinformationen, die beinhalten, welche Vorrichtungen dem Benutzer (100) oder Verwandten gehören, dass sich die Vorrichtung, die die Verschlechterung der Verbindung verursacht, außerhalb des Bereichs des Benutzers (100) befindet, und Präsentieren von verschiedenen Optionen für Maßnahmen für den Benutzer (100), wobei eine der Optionen die Option ist, die Vorrichtung zu trennen, wobei das Datensteuermodul (101) nach Empfang eines Befehls zum Trennen der Vorrichtung vom Benutzer (100) ferner dazu ausgelegt ist, durch Übertragen des Befehls zu einem Netzwerksystem die Vorrichtung aus der Infrastruktur des Benutzers (100) zu entfernen.

2. System nach Anspruch 1, wobei dass die Netzwerkverbindung eine WiFi-Verbindung umfasst.

3. System nach Anspruch 1, wobei die Anforderung vom Benutzer (100) in natürlicher Sprache ausgeführt wird und die nicht vom Benutzer (100) erzeugten Daten Umgebungsdaten und/oder Kontextdaten umfassen.

4. System nach Anspruch 1, das ferner ein Belohnungsplanrepositorium (104) umfasst, das dazu angepasst und ausgelegt ist, Informationen über verschiedene dem Benutzer (100) angebotenen Entschädigungen für das Modifizieren der Datenschutzstufen zu speichern, wobei die Entschädigung dem Benutzer (100) über das Datensteuermodul (101) angeboten wird, wobei die Entschädigung mindestens von der Art von Daten, vom spezifischen Verbraucher (105) der Daten, für die die Datenschutzstufen modifiziert werden, und vom Zweck, zu dem die Daten vom Verbraucher (105) genutzt werden, abhängig ist.

5. System nach Anspruch 1, wobei die Daten aus einem Satz von Datenspeichern kommen, die mit unterschiedlichen Elementen der Telekommunikationsnetzwerke sowie mit Elementen verknüpft sind, die zum Anbieten von Diensten via die Telekommunikationsnetzwerke erforderlich sind, die die Daten für mit dem Bereitstellen der Dienste verknüpfte Zwecke speichern.

6. Verfahren zum Steuern von persönlichen Daten eines Benutzers und zum Optimieren der Verwaltung des Zugriffs auf ein Telekommunikationsnetzwerk, wobei das Verfahren Folgendes umfasst:
- Speichern von Daten, die von einem Benutzer (100) während einer Verwendung von Telekommunikationsnetzwerken und der von den Telekommunikationsnetzwerken angebotenen Diensten erzeugt werden, und Daten, die von Informationsquellen außerhalb der Telekommunikationsnetzwerke erhalten und nicht vom Benutzer (100) erzeugt werden, in einer Datenbank (103), die mit dem Benutzer (100) verknüpft ist; und
- Zugreifen auf die in der Datenbank (103) gespeicherten Daten und Beibehalten einer Kontextinteraktion mit den gespeicherten Daten durch einen virtuellen Assistenten (200), der ein Datensteuermodul (101) beinhaltet;
wobei:
- das Datensteuermodul (101) die in der Datenbank (103) gespeicherten Daten für den Benutzer (100) verfügbar macht und es dem Benutzer (100) erlaubt, gemäß verschiedenen vom Benutzer (100) festgelegten Datenschutzstufen und in Abhängigkeit von einem potenziellen Verbraucher der Daten (105) und den Zwecken eines Verbrauchs Zugriffsberechtigungen für die in der Datenbank (103) gespeicherten Daten zu verwalten und auf die in der Datenbank (103) gespeicherten Daten gemäß den festgelegten Zugriffsberechtigungen zuzugreifen,
wobei:
- die Kontextinteraktion durch Folgendes durchgeführt wird:
a) Bestimmen von Kontextdomänen, die für den Benutzer (100) gelten, auf Basis der Analyse von mit dem Benutzer (100) verknüpften Entitäten, die vertraglich vereinbarte Dienste, Vorrichtungen und/oder Kontakte, denen sie interagieren, beinhalten, wobei die Kontextdomänen mindestens eine audiovisuelle Dienstdomäne und eine Netzwerkadministrationsdomäne umfassen
b) Kontextualisieren der Domäne auf Basis von historischen Aktivitätsdaten des Benutzers (100), die aus der Interaktion des Benutzers (100) mit dem Telekommunikationsnetzwerk und mit den Diensten eines Telekommunikationsanbieters gesammelt werden;
c) Kontextualisieren der Domäne auf Basis einer Historie von anderen Daten, die für den Benutzer (100) relevant sind, sich aber nicht auf dessen Aktivität beziehen;
d) Kontextualisieren der Domäne auf Basis von unmittelbaren Kontextdaten, die die tatsächliche Situation des Benutzers (100) charakterisieren; und
e) Bestimmen der Absicht des Benutzers (100) auf Basis der Kontextualisierung der vorherigen Schritte und auf Anforderung vom Benutzer (100) und
- der virtuelle Assistent (200) eine Netzwerkverbindung des Benutzers (100) durch Ausführen der folgenden Schritte optimiert:
■ Empfangen einer Anforderung vom Benutzer (100) zum Bestimmen der Ursache einer schlechten Netzwerkverbindung in einem Netzwerk des Benutzers (100);
■ Bestimmen, dass der Benutzer (100) mindestens einen Netzwerkdienst vertraglich vereinbart hat, und daher die Netzwerkadministrationskontextdomäne auf den Benutzer anwendet;
■ Kontextualisieren der Netzwerkadministrationsdomäne auf Basis von historischen Aktivitätsdaten des Benutzers (100) die den Anruf- und Messagingdatensatz des Benutzers (100) umfassen;
■ Kommunizieren der Anzahl von Vorrichtungen, die mit dem Netzwerk des Benutzers (100) verbunden sind, und einer Art von jeder an den Benutzer (100);
■ Bestimmen der von jeder der verbundenen Vorrichtungen verbrauchten Bandbreite und, welche von ihnen die ist, die eine Verschlechterung der Verbindung verursacht; und
■ Bestimmen auf Basis von Kontextinformationen, die beinhalten, welche Vorrichtungen dem Benutzer (100) oder Verwandten gehören, dass sich die Vorrichtung, die die Verschlechterung der Verbindung verursacht, außerhalb des Bereichs des Benutzers (100) befindet, und Präsentieren von verschiedenen Optionen für Maßnahmen für den Benutzer (100), wobei eine der Optionen die Option ist, die Vorrichtung zu trennen, wobei das Datensteuermodul (101) nach Empfang eines Befehls zum Trennen der Vorrichtung vom Benutzer (100) ferner dazu ausgelegt ist, durch Übertragen des Befehls zu einem Netzwerksystem die Vorrichtung aus der Infrastruktur des Benutzers (100) zu entfernen.

7. Verfahren nach Anspruch 6, wobei die Netzwerkverbindung eine WiFi-Verbindung umfasst und dadurch, dass der virtuelle Assistent (200) vor dem Optimieren der Netzwerkverbindung des Benutzers (100) das Netzwerk des Benutzers (100) durch Ausführen der folgenden Schritte aktiviert:
- Empfangen einer Anforderung vom Benutzer (100) zum Einschalten des Netzwerks des Benutzers (100);
- Bestimmen, dass die Netzwerkdienste, die mit dem Benutzer (100) vertraglich vereinbart sind, ein festes Breitband und ein mobiles Breitband beinhalten;
- Bestimmen von unmittelbaren Kontextdaten, die den Kanal, über den die Anforderung erfolgt, den Standort des Benutzers (100) und einen Status von dessen Mobilfunknetzwerk umfassen;
- Bestimmen, dass die Absicht des Benutzers (100) die ist, sein Heimnetzwerk zu aktivieren, wenn die unmittelbaren Kontextdaten bestimmen, dass der Benutzer zu Hause ist und dass das Mobilfunknetzwerk aktiviert ist; und
- Ermöglichen des Zugriffs auf das Internet durch Interagieren mit der Kommunikationsinfrastruktur, die mit dem Benutzer (100) vertraglich vereinbart ist.

8. Verfahren nach Anspruch 6, wobei der virtuelle Assistent (200) über eine Vorrichtung, die von einem Benutzer bedient wird, der vom Benutzer (100) gesteuert wird, durch Ausführen der folgenden Schritte auch Schadanwendungen detektiert:
- Empfangen einer Anforderung vom Benutzer (100) zum Aktivieren eines Jugendschutzdienstes;
- Identifizieren der Anwendungen, die bei dem vom Benutzer (100) gesteuerten Benutzer aktiv sind, und der besuchten Websites auf Basis von Daten, die über einen HTTP-Verkehr und DNS-Abfragen gespeichert sind;
- Bestimmen einer nicht zu empfehlenden Situation, wenn mindestens eine Anwendung der identifizierten Anwendungen als Schadprogramm charakterisiert ist, oder auf Basis des Altersbereichs, für den die Anwendung empfohlen ist; und
- Deinstallieren der Anwendung, nachdem dem Benutzer (100) verschiedene Korrekturoptionen gezeigt wurden, wobei eine der Optionen die Option zum Deinstallieren ist, und nach Bestätigung durch den Benutzer (100).

9. Verfahren nach Anspruch 6, wobei die Anforderung vom Benutzer (100) in natürlicher Sprache ausgeführt wird und die nicht vom Benutzer (100) erzeugten Daten Umgebungsdaten und/oder Kontextdaten umfassen.

10. Verfahren nach Anspruch 6, das ferner das Anbieten von verschiedenen Entschädigungen als Gegenleistung für das Modifizieren der Datenschutzstufen für den Benutzer (100) über das Datensteuermodul (101) umfasst, wobei dadurch, dass die Entschädigung mindestens von der Art von Daten, vom spezifischen Verbraucher (105) der Daten, für die die Datenschutzstufen modifiziert werden, und vom Zweck, zu dem die Daten vom Verbraucher (105) genutzt werden, abhängig ist.

11. Verfahren nach Anspruch 6 oder 10, wobei die Daten aus einem Satz von Datenspeichern kommen, die mit unterschiedlichen Elementen der Telekommunikationsnetzwerke sowie mit Elementen verknüpft sind, die zum Anbieten von Diensten via die Telekommunikationsnetzwerke erforderlich sind, die die Daten zu mit dem Bereitstellen der Dienste verknüpften Zwecken speichern.

12. Verfahren nach einem der vorhergehenden Ansprüche 6 bis 11, das das Erzeugen eines Benutzerprofils auf Basis der vom Benutzer (100) beim Verwenden der Telekommunikationsnetzwerke und der von denselben angebotenen Diensten erzeugt werden, umfasst.

13. Verfahren nach Anspruch 12, wobei das Benutzerprofil Informationen beinhaltet, die aus zwei oder mehr der Einheiten von Daten des Benutzers (100) abgeleitet und erhalten werden.

14. Verfahren nach Anspruch 12 oder 13, wobei das Benutzerprofil auch Informationen beinhaltet, die aus Daten des Benutzers (100) und externen Datenquellen (106) abgeleitet und erhalten werden.

15. Verfahren nach Anspruch 12, 13 oder 14, wobei das Benutzerprofil einem Datenverbraucher (105) auf Basis der vom Benutzer (100) selbst festgelegten Zugriffsberechtigungen offenbart wird.

## Revendications

1. Système de contrôle des données personnelles d'un utilisateur et d'optimisation de la gestion d'accès à un réseau de télécommunications, comprenant :
- une base de données (103) associée à un utilisateur (100) de réseaux de télécommunications adaptée et configurée pour stocker des données générées par l'utilisateur (100) pendant l'utilisation des réseaux de télécommunications et des services offerts par lesdits réseaux de télécommunications, et pour stocker des données obtenues à partir de sources d'informations externes aux réseaux de télécommunications non générées par l'utilisateur (100) ;
- un module de contrôle de données (101) ; et
- un assistant virtuel (200) inclus dans ledit module de contrôle de données (101) et connecté de manière opérationnelle à la base de données (103) pour accéder aux données stockées par celle-ci,
dans lequel
- le module de contrôle de données (101) est adapté et configuré pour mettre à la disposition de l'utilisateur (100) les données stockées dans la base de données (103) et pour permettre à l'utilisateur (100) de gérer les autorisations d'accès aux données stockées dans la base de données (103) conformément à différents niveaux de confidentialité établis par l'utilisateur (100) et en fonction d'un consommateur potentiel des données (105) et des finalités d'une consommation,
dans lequel la base de données (103) donne audit consommateur des données (105) l'accès aux données stockées sur l'utilisateur (100) selon les autorisations d'accès établies par l'utilisateur (100) ; et
- ledit assistant virtuel (200) est adapté et configuré pour :
- maintenir une interaction contextuelle avec les données stockées au moyen de :
a) la détermination de domaines contextuels applicables à l'utilisateur (100) sur la base de l'analyse d'entités associées à l'utilisateur (100) incluant des services contractés, des appareils et/ou des contacts avec lesquels il interagit, dans lequel lesdits domaines contextuels comprennent au moins un domaine de services audiovisuels et un domaine d'administration de réseau ;
b) la contextualisation du domaine sur la base de données d'activité historiques de l'utilisateur (100) collectées à partir de l'interaction de l'utilisateur (100) avec le réseau de télécommunications et avec les services d'un opérateur de télécommunications ;
c) la contextualisation du domaine sur la base d'un historique d'autres données pertinentes pour l'utilisateur (100) mais non liées à son activité ;
d) la contextualisation du domaine sur la base de données de contexte immédiat caractérisant la situation réelle de l'utilisateur (100) ; et
e) la détermination de l'intention de l'utilisateur (100) sur la base de la contextualisation des étapes précédentes et sur une requête provenant de l'utilisateur (100) ; et
- optimiser une connexion de réseau de l'utilisateur (100) en réalisant les étapes suivantes :
■ la réception d'une requête provenant de l'utilisateur (100) pour déterminer la cause d'une mauvaise connexion de réseau dans un réseau de l'utilisateur (100) ;
■ la détermination que l'utilisateur (100) a contracté au moins un service de réseau et applique donc le domaine contextuel d'administration de réseau à l'utilisateur ;
■ la contextualisation du domaine d'administration de réseau sur la base de données d'activité historiques de l'utilisateur (100) comprenant l'enregistrement d'appel et de messagerie de l'utilisateur (100) ;
■ la communication à l'utilisateur (100) du nombre de dispositifs connectés au réseau de l'utilisateur (100) et d'un type de chacun ;
■ la détermination de la bande passante consommée par chacun desdits dispositifs connectés et lequel d'entre eux est celui provoquant une détérioration dans la connexion ; et
■ la détermination, sur la base d'informations de contexte, incluant quels dispositifs appartiennent à l'utilisateur (100) ou à des proches, que le dispositif provoquant la détérioration dans la connexion est externe à la zone de l'utilisateur (100), et la présentation de différentes options d'action à l'utilisateur (100), l'une des options étant l'option de déconnecter ledit appareil, le module de contrôle de données (101) lors de la réception d'une commande provenant de l'utilisateur (100) pour déconnecter ledit dispositif étant en outre configuré pour supprimer ledit dispositif de l'infrastructure de l'utilisateur (100) au moyen de la transmission de ladite commande à un système de réseau.

2. Système selon la revendication 1, dans lequel que la connexion de réseau comprend une connexion WiFi.

3. Système selon la revendication 1, dans lequel ladite requête provenant de l'utilisateur (100) est réalisée en langage naturel et les données non générées par l'utilisateur (100) comprennent des données environnementales et/ou des données de contexte.

4. Système selon la revendication 1, comprenant en outre un référentiel de plans de récompense (104) adapté et configuré pour stocker des informations concernant une compensation différente offerte à l'utilisateur (100) pour la modification desdits niveaux de confidentialité, dans lequel ladite compensation est offerte à l'utilisateur (100) par l'intermédiaire du module de contrôle de données (101), dans lequel la compensation dépend au moins du type de données, du consommateur spécifique (105) des données par rapport auxquelles les niveaux de confidentialité sont modifiés et de la finalité pour laquelle les données seront utilisées par ledit consommateur (105).

5. Système selon la revendication 1, dans lequel lesdites données proviennent d'un ensemble de stockages de données associés à une variété d'éléments des réseaux de télécommunications et d'éléments requis pour offrir des services via lesdits réseaux de télécommunications qui stockent les données pour des finalités associées à la fourniture des services.

6. Procédé de contrôle de données personnelles d'un utilisateur et d'optimisation de la gestion d'accès à un réseau de télécommunications, le procédé comprenant :
- le stockage dans une base de données (103) associée à un utilisateur (100) de données générées par l'utilisateur (100) durant l'utilisation de réseaux de télécommunications et des services offerts par lesdits réseaux de télécommunications, et de données obtenues à partir de sources d'informations externes aux réseaux de télécommunications, non générées par l'utilisateur (100) ; et
- l'accès, par un assistant virtuel (200) incluant un module de contrôle de données (101), aux données stockées par la base de données (103) et le maintien d'une interaction contextuelle avec les données stockées ;
dans lequel :
- ledit module de contrôle de données (101) met à la disposition de l'utilisateur (100) les données stockées dans la base de données (103), et permet à l'utilisateur (100) de gérer les autorisations d'accès aux données stockées dans la base de données (103) conformément à différents niveaux de confidentialité établis par l'utilisateur (100) et en fonction d'un consommateur potentiel des données (105) et des finalités d'une consommation, et d'accéder aux données stockées dans la base de données (103) selon les autorisations d'accès établies,
dans lequel :
- ladite interaction contextuelle est effectuée par :
a) la détermination de domaines contextuels applicables à l'utilisateur (100) sur la base de l'analyse d'entités associées à l'utilisateur (100) incluant des services contractés, des appareils et/ou des contacts avec lesquels il interagit, dans lequel les domaines contextuels comprennent au moins un domaine de services audiovisuels et un domaine d'administration de réseau
b) la contextualisation du domaine sur la base de données d'activité historiques de l'utilisateur (100) collectées à partir de l'interaction de l'utilisateur (100) avec le réseau de télécommunications et avec les services d'un opérateur de télécommunications ;
c) la contextualisation du domaine sur la base d'un historique d'autres données pertinentes pour l'utilisateur (100) mais non liées à son activité ;
d) la contextualisation du domaine sur la base de données de contexte immédiat caractérisant la situation réelle de l'utilisateur (100) ; et
e) la détermination de l'intention de l'utilisateur (100) sur la base de la contextualisation des étapes précédentes et sur une requête provenant de l'utilisateur (100), et
- l'assistant virtuel (200) optimise une connexion de réseau de l'utilisateur (100) en réalisant les étapes suivantes :
■ la réception d'une requête provenant de l'utilisateur (100) pour déterminer la cause d'une mauvaise connexion de réseau dans un réseau de l'utilisateur (100) ;
■ la détermination que l'utilisateur (100) a contracté au moins un service de réseau et applique donc le domaine contextuel d'administration de réseau à l'utilisateur ;
■ la contextualisation du domaine d'administration de réseau sur la base de données d'activité historiques de l'utilisateur (100) comprenant l'enregistrement d'appel et de messagerie de l'utilisateur (100) ;
■ la communication à l'utilisateur (100) du nombre de dispositifs connectés au réseau de l'utilisateur (100) et d'un type de chacun ;
■ la détermination de la bande passante consommée par chacun desdits dispositifs connectés et lequel d'entre eux est celui provoquant une détérioration dans la connexion ; et
■ la détermination, sur la base d'informations de contexte, incluant quels dispositifs appartiennent à l'utilisateur (100) ou à des proches, que le dispositif provoquant la détérioration dans la connexion est externe à la zone de l'utilisateur (100), et la présentation de différentes options d'action à l'utilisateur (100), l'une des options étant l'option de déconnecter ledit appareil, le module de contrôle de données (101) lors de la réception d'une commande provenant de l'utilisateur (100) pour déconnecter ledit dispositif étant en outre configuré pour supprimer ledit dispositif de l'infrastructure de l'utilisateur (100) au moyen de la transmission de ladite commande à un système de réseau.

7. Procédé selon la revendication 6, dans lequel la connexion de réseau comprend une connexion WiFi et en ce que l'assistant virtuel (200), préalablement à l'optimisation de la connexion de réseau de l'utilisateur (100), active le réseau de l'utilisateur (100) en réalisant les étapes suivantes :
- la réception d'une requête provenant de l'utilisateur (100) pour allumer le réseau de l'utilisateur (100) ;
- la détermination que les services de réseau contractés par l'utilisateur (100) incluent du haut débit fixe et du haut débit mobile ;
- la détermination de données de contexte immédiat comprenant le canal par l'intermédiaire duquel la requête est faite, la localisation de l'utilisateur (100) et un état de son réseau mobile ;
- la détermination que l'intention de l'utilisateur (100) est d'activer son réseau domestique lorsque lesdites données de contexte immédiat déterminent que l'utilisateur est dans sa résidence et que le réseau mobile est activé ; et
- la permission d'accès à Internet par interaction avec l'infrastructure de communications que l'utilisateur (100) a contractée.

8. Procédé selon la revendication 6, dans lequel l'assistant virtuel (200) détecte également des applications malveillantes sur un dispositif actionné par un utilisateur contrôlé par l'utilisateur (100) en réalisant les étapes suivantes :
- la réception d'une requête provenant de l'utilisateur (100) pour activer un service de contrôle parental ;
- l'identification des applications que ledit utilisateur contrôlé par l'utilisateur (100) a actives et les sites Web visités sur la base de données stockées sur du trafic HTTP et des requêtes DNS ;
- la détermination d'une situation non recommandée si au moins une application desdites applications identifiées est **caractérisée** en tant que malware ou sur la base de la tranche d'âge pour laquelle ladite application est recommandée ; et
- la désinstallation de l'application lors de l'affichage à l'utilisateur (100) de différentes options correctives, l'une des options étant l'option de désinstaller et lors d'une confirmation par l'utilisateur (100).

9. Procédé selon la revendication 6, dans lequel la requête provenant de l'utilisateur (100) est réalisée en langage naturel et les données non générées par l'utilisateur (100) comprennent des données environnementales et/ou des données de contexte.

10. Procédé selon la revendication 6, comprenant en outre l'offre à l'utilisateur (100), au moyen du module de contrôle de données (101), d'une compensation différente en échange de la modification desdits niveaux de confidentialité, dans lequel en ce que la compensation dépend au moins du type de données, du consommateur spécifique (105) des données par rapport auxquelles les niveaux de confidentialité sont modifiés et de la finalité pour laquelle les données seront utilisées par ledit consommateur (105).

11. Procédé selon la revendication 6 ou 10, dans lequel lesdites données proviennent d'un ensemble de stockages de données associés à une variété d'éléments des réseaux de télécommunications et d'éléments requis pour offrir des services via lesdits réseaux de télécommunications qui stockent les données pour des finalités associées à la fourniture des services.

12. Procédé selon l'une quelconque des revendications précédentes 6 à 11, comprenant la génération d'un profil d'utilisateur sur la base des données générées par l'utilisateur (100) durant l'utilisation des réseaux de télécommunications et des services offerts par ceux-ci.

13. Procédé selon la revendication 12, dans lequel le profil d'utilisateur inclut des informations dérivées et obtenues à partir de deux ou plusieurs desdits éléments de données de l'utilisateur (100).

14. Procédé selon la revendication 12 ou 13, dans lequel le profil d'utilisateur inclut également des informations dérivées et obtenues à partir de données de l'utilisateur (100) et de sources de données externes (106).

15. Procédé selon la revendication 12, 13 ou 14, dans lequel le profil d'utilisateur est divulgué à un consommateur de données (105) sur la base des autorisations d'accès établies par l'utilisateur lui-même (100).
